Europäisches Patentamt

European Patent Office

Office européen des brevets

(11) Publication number : **0 316 304 B1**

(12) **EUROPEAN PATENT SPECIFICATION**

(19)

(45) Date of publication of patent specification :
08.07.92 Bulletin 92/28

(21) Application number : **89100243.8**

(22) Date of filing : **13.09.82**

(51) Int. Cl.⁵: **G11B 27/32, G11B 27/024**

(54) **Apparatus for converting cue data.**

(30) Priority : **14.09.81 JP 145286/81**

(43) Date of publication of application :
**17.05.89 Bulletin 89/20**

(45) Publication of the grant of the patent :
**08.07.92 Bulletin 92/28**

(84) Designated Contracting States :
**AT CH DE FR GB IT LI NL**

(56) References cited :
DE-A- 2 019 327
DE-A- 2 907 834
NEUES AUS DER TECHNIK, no. 4/5, 1st Sep-
tember 1977, page 4, article no. 411, Würzburg,
DE; "Verfahren zum Zufügen vonDateninfor-
mation zu einer Videoplatte"
ELECTRO/81 CONFERENCE RECORD, vol. 6,
7th-9th April 1981, pages 1-9, New York, US;
H.F. OLIJHOEK et al.: "Masteringtechnology
for the philips optical disk systems"

(56) References cited :
JOURNAL OF THE AUDIO ENGINEERING
SOCIETY, vol. 28, no. 9, September 1980,
pages 615-628, New York, US; "Digital
audiotechnical committee report"
PATENT ABSTRACTS OF JAPAN, vol. 7, no.
130 (P-202)[1275], 7th June 1983; & JP-A-58 48
281
PATENT ABSTRACTS OF JAPAN, vol. 7, no.
130 (P-202)[1275], 7th June 1983; & JP-A-58 48
280

(60) Publication number of the earlier application in
accordance with Art. 76 EPC : **0 074 841**

(73) Proprietor : **SONY CORPORATION**
7-35 Kitashinagawa 6-chome Shinagawa-ku
Tokyo 141 (JP)

(72) Inventor : **Ohtsuki, Tadashi c/o Patents
Division**
Sony Corporation 7-35 Kitashinagawa
Shinagawa-ku Tokyo 141 (JP)

(74) Representative : **Thomas, Christopher Hugo et
al**
D Young & Co 10 Staple Inn
London WC1V 7RD (GB)

## Description

This invention relates to apparatus for converting cue data.

The cue data may, for example, relate to the content, quantity or quality of programme information that is recorded on a record medium such as a magnetic tape. Such programme information may be a video programme or an audio programme. Moreover, the record medium may, for example, be a magnetic tape, a magnetic disc, a video disc or a digital audio disc (sometimes known as a DAD or an audio PCM disc).

Conventionally, audio discs have analog audio information recorded therein in the form of undulations in a spiral groove. Such undulations are sensed by a stylus of a playback device. Typically, the stylus is coupled to a magnetic sensor, or cartridge, whereby the mechanical motion of the stylus is converted to an electrical signal, and this electrical signal is ultimately converted into audible sound. Recently, it has been proposed to digitize audio information, and to record the digital audio signals directly on a disc. The digital signals are sensed, or played back, by an optical means such as a scanning laser beam. The reproduced digital signals are then re-converted back to audio signals which are used to generate corresponding sounds. Many advantages arise from the digital recording of audio information, such as markedly improved fidelity to the original audio signals, and the ability to produce high-density digital audio discs which contain a large quantity of information and thus permit relatively long playback times. Moreover, since the playback "head" need not be in physical contact with the disc, the disc will be subjected to virtually no wear, and also selected portions or programmes can be rapidly accessed for reproduction.

In digitizing the audio information to be recorded, analog audio signals are generally sampled, and each sample is converted to a digital signal, such as a pulse code modulated (PCM) signal. This technique, which may be altered and modified in various respects, has given rise to the designation of the audio PCM disc.

To ensure proper playback of the audio information, various synchronizing and control signals are also recorded on the disc, and these signals are preferably multiplexed with the digital audio signals. The use of digital techniques enables at least some of the control signals to function as cue signals by which the playback equipment, editing equipment or the like is "cued" to carry out various functions. For example, the cue signals may represent the identity of the audio information programme which is recorded, the length of that program me, the number of programmes recorded on a disc, the location of the end of a programme, the composer, author or performers of a program me, and various movements of that programme (particularly where such programmes are musical performances). Moreover, if the audio PCM disc is used in conjunction with, for example, a display device, such as a line or text display, the latter can be controlled or synchronized with the reproduced audio information as a function of the cue signals on the disc. Still further, if the programme information can be recorded in various different modes or formats, the cue data can identify such modes or formats so as to condition the playback apparatus to be compatible therewith.

Many of the techniques which have been used to produce conventional analog audio record discs can also be used to produce audio PCM discs. For example, a so-called "master tape" may be prepared by recording the audio information on a magnetic tape; and this master tape may then be used to produce a "mother" disc or a "stamper" disc from which replica discs are made and ultimately sold to customers. In order to record the cue signals on replica audio PCM discs, it is desirable to have the cue signals recorded on the master tape. Usually, however, the master tape on which the audio PCM signals are recorded is not provided with all of the requisite cue signals which are to be recorded on the audio PCM discs or which are helpful in producing such discs. Typically, the master tape is a video tape on which the audio PCM signals are recorded in pseudo-video format. That is, the audio PCM signals are recorded by a helical scan video tape recorder (VTR) in parallel, skewed tracks on a magnetic tape, accompanied by synchronizing signals which are analogous to the conventional horizontal and vertical synchronizing signals normally provided in television signals. Also, and as is conventionally recorded by VTRs, so-called time code signals are recorded on the magnetic tape to indicate the relative location on the tape at which the respective tracks are found. Such time code signals facilitate rapid access to desired portions on the tape, and are useful in editing operations. The techniques of, for example, time code recording and editing are quite useful in preparing master tapes for audio PCM recording.

An article 'Verfahren zum Zufugen von Dateninformation zu einer Videoplatte' in Neues aus der Technik (1977.09), page 4, article 411 discloses an apparatus for adding cue data to the single frames of a video disc.

According to the present invention there is provided apparatus for converting first cue data recorded on a first recording medium and representing predetermined characteristics of information also recorded on said first recording medium into second cue data to be recorded on a second recording medium, said apparatus comprising:

reproduced signal input circuit means for receiving played back first cue data and information from said first recording medium;

code signal generating means for generating code signals having a predetermined relationship with said played back information and representing relative locations on said first recording medium at which said information is recorded;

memory means for temporarily storing said played back first cue data; and signal output means for deriving said second cue data and information to be recorded on said second recording medium;

characterized in that:

said first cue data recorded on said first recording medium includes a first portion containing data representing the predetermined characteristics of the recorded information and an associated second portion containing data representing the relative locations on said first recording medium at which said predetermined characteristics occur;

and by:

converting means for converting said first cue data into said second cue data having a different form from said first cue data; and format means for combining said first cue data from said converting means and the played back information and for encoding them into a combined signal having said second cue data portion and an information portion to be recorded on said second recording medium.

The invention will now be described by way of example with reference to the accompanying drawings, in which:

Figures 1A and 1B are schematic representations of the cue data and information, such as audio PCM information signals, recorded on a record disc;

Figures 2A to 2C are schematic representations of the cue data that is recorded on, for example, a magnetic tape;

Figures 3A to 3C are timing diagrams which are useful in understanding what is represented by some of the cue data;

Figure 4 is a schematic representation of a portion of a master magnetic tape;

Figures 5 to 7 are block diagrams of different examples of apparatus which is used to record cue data on the magnetic tape;

Figures 8A to 8E schematically represent the format of the cue data which is recorded on the magnetic tape;

Figure 9 is a block diagram of a further apparatus wherein a record disc is produced in response to a so-called master tape having both cue data and information recorded thereon;

Figures 10A to 10B together form a block diagram of a cue data editor;

Figure 11 is a schematic, plan illustration of a cue editor keyboard; and

Figures 12A to 12E are timing diagrams which are useful in understanding typical operations of the keyboard shown in Figure 11.

As will become apparent from the following description, the invention relates to the recording of cue data that is useful in representing predetermined characteristics of virtually any type of information. One advantageous use of such cue data is to represent different portions and characteristics of, for example, audio programmes which are recorded on an audio PCM disc. However, the invention is not limited solely to record discs or to audio PCM signals recorded on such discs. Nevertheless, the invention will be understood by describing it in the context of audio PCM signals which are recorded first on a so-called master tape and from which master tape, audio PCM discs are subsequently produced.

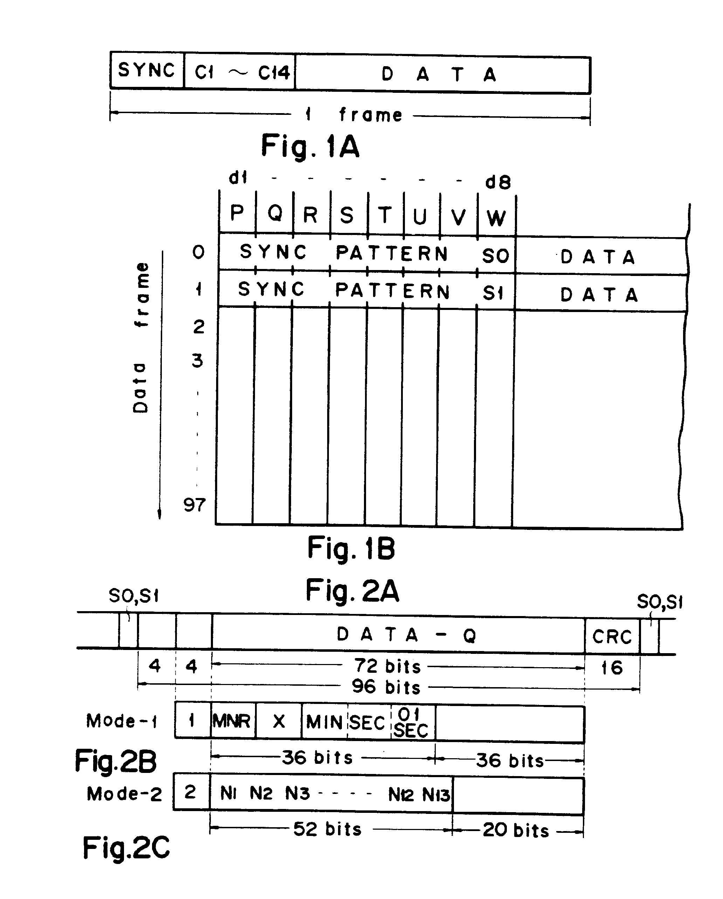

Referring to Figure 1A, there is schematically illustrated the format of a "frame" of signals which are recorded in, for example, one track of an audio PCM disc. The frame of signals includes data information, such as audio PCM signals, which are preceded by a synchronizing signal, or pattern, disposed at the beginning or "head" of the frame, followed by cue signals which, in one example, are represented as 14-bit cue signls C1 to C14. In the example described herein, the 14-bit cue signal is formed by multiplexing individual bits of respective cue data channels. More particularly, eight cue channels may be provided, and the 14-bit cue signal is formed by selecting one bit from each of these eight cue channels, and then converting the resultant 8-bit cue signal to a 14-bit cue signal. Such an 8/14 bit conversion is helpful in improving noise immunity of the digital signal.

Figure 1B represents ninety-eight successive data frames, each frame having the format illustrated in Figure 1A. It is seen herein that eight cue channels are provided, these cue channels being represented as channels P, Q, R .... W. Examples of the P-channel cue data and the Q-channel cue data are described below. These channels represent predetermined characteristics of the information with which they are recorded. For example, in an audio PCM recording system, the information is formed of audio information, such as musical programmes. The P-channel and Q-channel cue signals may represent the beginning, end and certain intermediate portions of each musical programme. As will be described, the P-channel cue data merely represents the occurrence of, for example, the beginning and end of a music programme. The Q-channel cue data represents the beginning, end and intermediate portions of each music programme, as well as the relative location on the record medium of the beginning, end and intermediate portions. The remaining R-channel, S-channel ... W-channel cue signals may represent the title of audio or music programmes, textual information relating to those programmes, the performers of those programmes, and other data associated with such programmes, as may be desired.

In the format illustrated in Figure 1B, the information (for example, audio PCM signals) recorded in data frame 0 are preceded by eight multiplexed bits (which subsequently are converted into a 14-bit character) consisting of, for example, the 0th bit from each of the P-channel, Q-channel ... W-channel. Preferably, the eight bits d1 to d8 in data frame 0 form a synchronizing pattern referred to as sync pattern S0. The next-following data frame 1 consists of useful data (for example, audio PCM signals) preceded by the first bit in each of the P-channel, Q-channel ... W-channel. These multiplexed first bits d1 to d8 form another synchronizing pattern which is identified as sync pattern S1. Likewise, in next-following data frame 2, the data is preceded by the second bit in each of the P-channel, Q-channel, ... W-channel. These multiplexed bits form the cue signal d1 to d8. The remaining data frames 3 to 97 are each of a similar format to that shown in Figure 1B and just described.

Each data frame shown in Figure 1B is re-formatted to the format shown in Figure 1A, wherein each 8-bit cue signal d1 to d8 is converted to a corresponding 14-bit cue signal C1 to C14. This data frame, including the synchronizing pattern, multiplexed cue signal and data (for example, audio PCM signal) is used to produce an audio PCM disc. The illustrated frame shown in Figure 1A may be recorded in a track on such an audio PCM disc.

As mentioned in the introductory portion of this specification, one technique for producing an audio PCM disc is to utilize in the disc-production process a master tape on which all the necessary audio PCM (and cue data) information is recorded. For example, the master tape containing the audio PCM signals and cue data may be used to etch or "cut" a mother or stamper disc from which replica audio PCM discs are stamped.

Referring again to Figure 1B, it will be appreciated that, for example, the Q-channel data signal is formed of ninety-eight bits, the first two bits, that is bits 0 and 1, being included in the sync patterns S0 and S1, respectively, and the remaining ninety-six bits representing cue data. As will be described below, the Q-channel cue data is representative of relatively sophisticated cue information, such as the identity (for example, address number) of a music programme, the beginning and end portions of that programme, and various intermediate portions, such as sub-addresses which may be used to represent, inter alia, a particular movement of a music programme. In addition, the Q-channel cue data may include timing information representing the duration as well as relative times of occurrence of the different portions of the audio programme.

The P-channel cue data may be relatively simpler than the aforementioned Q-channel cue data. For example, the P-channel cue signal may be a flag to indicate the beginning and end of an audio programme, as well as a pause in that programme. In a specific embodiment, the P-channel cue signal may be a two-level signal having a relatively lower level throughout the duration of an audio programme and a relatively higher level through the duration of a pause within or between such programmes. In addition, the P-channel cue signal may appear as an alternating signal having a frequency of about 2 Hz to define the lead-out section of the record disc. It will be appreciated that detection of this 2 Hz signal is indicative of the lead-out section of the disc, so as to suitably control the record disc playback device.

Thus, when the P-channel and/or Q-channel cue data is recorded on the record disc, desired programmes may be quickly and selectively accessed for playback by detecting and processing the cue data, and desired portions of such programmes may be selected directly. Thus, respective ones of the recorded programmes may be selected at random, and the playback device with which the record disc is used may be operated in conjunction with the recorded cue data so as to shift quickly from one programme to another and, moreover, from one portion of a programme to yet another portion of a still further programme. Hence, user selection of pre-recorded materials is greatly enhanced and is quite flexible.

In the format illustrated in Figure 1B, it is seen that each frame includes one bit sample of each of the P-channel, Q-channel, ... W-channel cue signals. With reference to the P-channel cue signal, as mentioned above, this signal is at a relatively high level throughout a pause interval, for example, and is at a relatively low level throughout an audio programme interval. Hence, for each bit sample in the P-channel cue signal, there will be either a binary "0" or a binary "1" present depending upon whether the audio programme, at the time of that bit sample, is present or whether a pause interval is present. The bit samples of the Q-channel cue signal are described below with respect to Figures 2A to 2C.

Figure 2A represents the ninety-eight successive bits which comprise a Q-channel cue signal. As illustrated, the first two bits (which appear in data frames 0 and 1 in Figure 1B) are included in sync patterns S0 and S1. The next four bits of this Q-channel cue signal (that is the bits contained in data frames 2 to 5) indicate whether the audio PCM signals represent 2-channel or 4-channel signals and, moreover, whether the original audio information has been subjected to pre-emphasis. The next four bits of the Q-channel cue signal (which appear in data frames 6 to 9) indicate the mode of the Q-channel. The Q-channel cue data may be as shown in Figure 2B (mode 1) or as shown in Figure 2C (mode 2). In mode 1, the cue data indicates the number (MNR) of the audio programmes, an index (X) number representing, for example, the number of a movement, or equivalent, if the audio programme is a music piece, and timing information (in terms of minutes, seconds and tenths of seconds) which represents substantially real time in the duration of the audio programme. Figure 2B also illustrates "spare" bits, represented by the cross-hatched area, in the event that further information is to be represented by the cue data. The seventy-two information bits included in this cue data are disposed in data frames 10 to 81, respectively (Figure 1B).

The audio programme number (MNR), sometimes referred to herein as the "music number" to indicate the number of the musical selection that is recorded on the record disc, preferably is a 2-digit number formed of two 4-bit BCD characters, and may be any decimal number from 00 to 99. Preferably, although not necessarily, the music number MNR is set at 00 throughout all of the data frames in the lead-in track so as to identify that lead-in track on the disc. Also, the hexadecimal number AA is used as the music number (MNR) in all of the data frames in the lead-out track so as to identify that lead-out track. Index number (X) is also a 2-digit decimal number represented by two 4-bit characters. Preferably, a pause in or between audio programmes is represented by the index number (X) 00, and the actual movement or intermediate portion of an audio programme may be represented by any index number (X) from 01 to 99. The timing information is represented as a 5-digit number formed of a 2-digit minutes representation (tens and units), a 2-digit seconds representation (tens and units) and a 1-digit tenths of seconds representation. As a musical piece, for example, continues, the length of time of that piece is represented by updated timing information from zero until that musical piece ends. Hence, the timing information represents the length of time, up to that point, of the musical piece. The timing information also may represent the length of time of a pause between musical pieces, and in this representation, the timing information is decreased from a value representing the total length of time of the pause down to zero at the end of the pause and, thus, at the beginning of the next musical piece. Thus, during a pause interval, the timing information represents the amount of time remaining until the completion of that pause interval.

In mode 2 of the Q-channel cue data, as shown in Figure 2C, the cue data comprises thirteen decimal digits, each formed of a 4-bit character, N1 to N13. These digits may be used as a catalogue or identifying number of the disc, similar to conventional barcoding. Since the amount of data represented by the Q-channel cue signal in mode 2 is far less than that represented in mode 1, both modes can be recorded on the same disc, with mode 2, for example, being provided in or next adjacent the lead-in or lead-out track.

Returning to Figure 2A, following the seventy-two bits of the Q-channel cue data is a 16-bit cyclic redundancy check (CRC) code signal. This CRC code signal is conventional and is utilized to detect and correct errors that may be present in the 80-bit Q-channel data. The CRC code signal bits are disposed in data frames 82 to 97 (Figure 1B) of the Q-channel.

The relationship between the P-channel and Q-channel cue data and the actual audio programmes which are recorded on the audio PCM disc are illustrated schematically in Figures 3A to 3C. Figure 3A represents successive tracks commencing with the lead-in track having, for example, the smallest radius, and terminating with the lead-out track having the greatest radius. Between the lead-in and lead-out tracks are four separate music programmes, with pauses provided between the lead-in track and music programme 1, between the music programmes 1 and 2, and between the music programmes 2 and 3. Figure 3A further represents a cross-fade change-over from the music programme 3 to the music programme 4. The lead-out track follows immediately after the completion of the music programme 4.

It is appreciated that the music programme information is represented in Figures 1A and 1B by the "DATA" area, and the P-channel, Q-channel, ... W-channel cue data is multiplexed and recorded with this audio data, as best illustrated in Figure 1B.

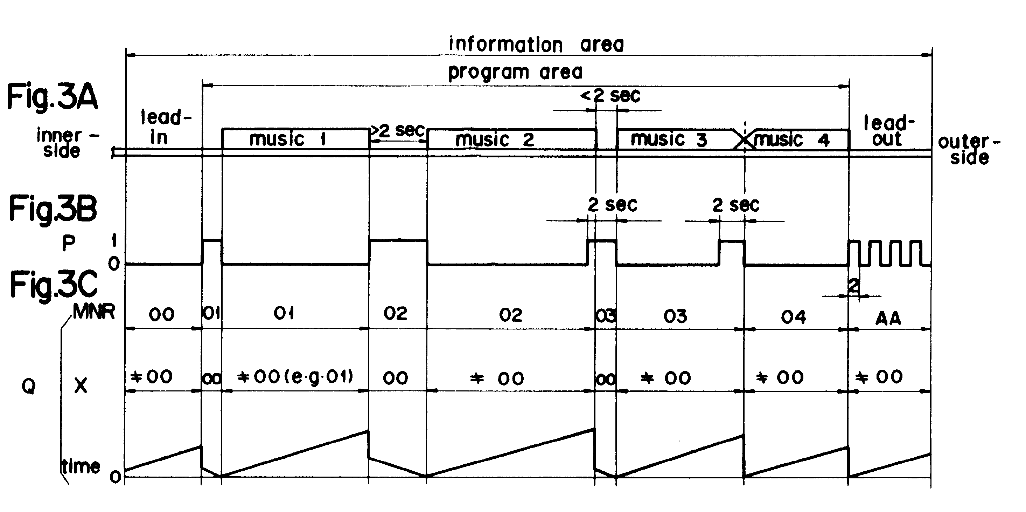

Figure 3B represents the P-channel cue signal, wherein a pause interval is represented by a binary "1" and an audio programme, or music interval, is represented by a binary "0". The actual duration of a binary "1" P-channel cue signal will be equal to the pause interval between audio programmes provided that such a pause interval is equal to or greater than two seconds. If the actual pause interval is less than two seconds, such as indicated between the programmes 2 and 3, the duration of the binary "1" P-channel cue signal will, nevertheless be fixed at two seconds. Moreover, in the event of a cross-fade between two music programmes, such as between the music programmes 3 and 4, the P-channel cue signal will, nevertheless, exhibit its binary "1" level for the fixed period of two seconds, as illustrated. As also illustrated in Figure 3B, the P-channel cue signal appears as an alternating signal throughout the lead-out interval.

The actual signals which are recorded in the P-channel for each data frame shown in Figure 1B will be a binary "0" or a "1", depending upon the level of the P-channel cue signal illustrated in Figure 3B at the time of occurrence of each respective data frame.

Figure 3C represents, on separate axes, the music number (MNR), the index number (X) and timing data included in the mode 1 Q-channel cue signal. As mentioned above, and as illustrated in Figure 3C, the music number (MNR) is set at 00 to identify the lead-in track, and is set at AA to identify the lead-out track of the audio PCM disc. This music number (MNR) is changed over to the numerical value 01 upon the occurrence of the first pause interval to represent the first music programme, and this music number (MNR) remains set at 01 throughout the duration of this first music programme. At the completion of the first music programme, the music number (MNR) is changed over to 02 to identify the second music programme. As illustrated, the music number (MNR) is changed over at the pause interval separating the music programmes 1 and 2, and remains set at 02 throughout the second music interval. Consistent with the foregoing, the music number (MNR) is changed over to 03 to identify the third music programme, and at the completion thereof, the music number (MNR) is changed over to 04 to represent the fourth music programme. It will be appreciated that, if additional music programmes are recorded on this disc, the music number (MNR) will continue to be incremented so as properly to identify the number of the additional music programmes. Hence, the music number (MNR) serves as an address for each music programme.

Figure 3C also illustrates the index number (X) which, as mentioned above, is set at 00 to identify each pause interval. The index number (X) is other than 00 (that is, it is not 00) during the lead-in and lead-out portions of the disc, and also during the respective music programmes. As an example, if the index number (X) represents a respective movement of each music programme, such movements are identified by the 2-digit index number. Of course, the index number (X) can be used to represent other intermediate or sub-portions of each audio programme.

Finally, Figure 3C represents the change in time from time zero throughout each audio programme, and also change in time down to time zero during each pause interval. Thus, during a music interval, or audio programme, the timing information included in the Q-channel cue data (Figure 2B) represents the passage of time from the beginning of that programme. In each pause interval, the time information commences at a value which represents the length of time of the pause interval, and gradually decreases to zero value at the completion of the pause interval.

The music number (MNR), the index number (X) and time information, all shown in Figure 3C, are represented as the 96-bit data shown in Figures 2A and 2B, this data being repeated, or updated, every ninety-eight data frames, as shown in Figure 1B. That is, at every ninety-eight data frames, the time information is updated and, if there has been a change, the music number (MNR) and/or the index number (X) also is updated. If there has been no change in the music number (MNR) it remains constant. Likewise, if there is no change in the index number (X) it too remains constant. Nevertheless, the time information is updated every ninety-eight data frames. It is recognized that, of course, time changes over the ninety-eight data frames. However, it is expected that the overall system timing is such that, for example, 980 (or even 1000) data frames occur each second and, therefore, the tenths of seconds digit in Figure 2B will normally be updated only once every ninety-eight data frames without loss of accurate timing data.

Figures 1 to 3 represent the cue data that is recorded on a record disc, such as an audio PCM disc. As mentioned above, the information recorded on such discs is generally derived from a master tape. This tape is used to "cut" a mother disc from which a stamper disc is made, the stamper disc then being used to stamp replica discs ultimately for use by customers. The cue data shown in Figures 1 to 3 is not recorded on the master tape in the same format that is used to record the cue data on the audio PCM disc. Rather, the cue data which is recorded on the master tape is merely a "list" of events, or occurrences of predetermined characteristics in the audio programmes (for example, beginning, end and intermediate portions such as musical movements, or the like) together with times of occurrences of such characteristics. This cue data which is recorded on the master tape thus may be viewed simply as a "table of contents", and to distinguish the cue data which is recorded on the audio PCM disc from the cue data which is recorded on the master tape, the latter cue data is referred to simply as TOC (Table of Contents) data.

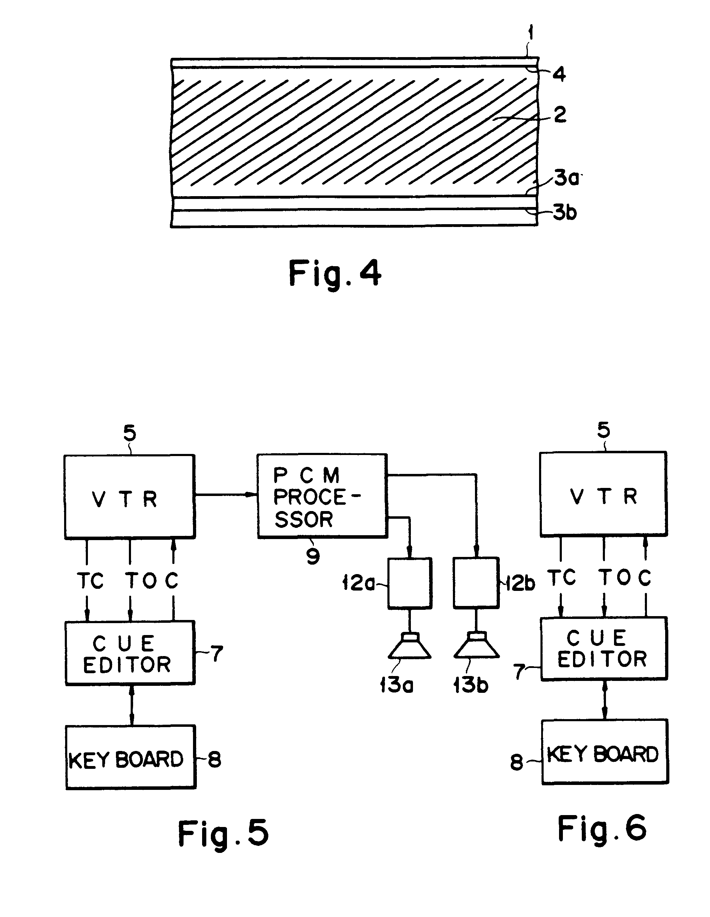

Figure 4 is a schematic illustration of the signal tracks recorded on a magnetic tape 1, which may be used as the master tape from which the audio PCM discs may be produced. The tape 1 is the type conventionally used to record video signals and is referred to herein as a video tape. Audio information, such as digital audio signals (or audio PCM signals) are recorded in skewed tracks 2 by the recording transducers of a helical scan recorder of the type similar to those used for recording video signals. Longitudinal tracks 3a and 3b, on which a VTR normally records audio signals, have time code (TC) signals and TOC signals recorded therein, respectively. The time code signals TC may advantageously be of the conventional SMPTE time code representing hours, minutes, seconds and frames, and typically are incremented as the recording proceeds. Such time code signals thus represent respective addresses of the tape 1 and indicate a relative location along the length of the tape 1 so that they may be used to address, or access, a particular one of the tracks 2 to recover the information recorded in the accessed track 2. Since the use of time code signals on video tapes is known, further description thereof is not provided in the interest of brevity.

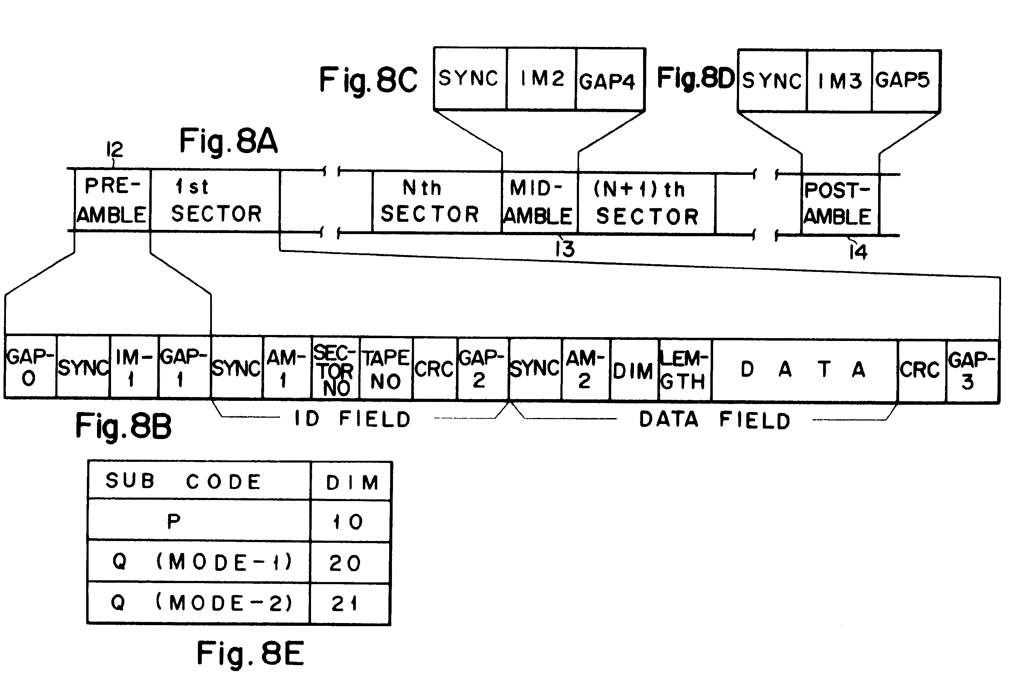

The TOC data recorded in the track 3b is of a format described hereinbelow with respect to Figure 8. Suffice it to say that this TOC data is provided with, for example, an audio programme number (MNR) for identifying an audio programme (for example, programme 1, programme 2, etc) and the relative location of that audio programme, as may be represented by a time code signal, an index number (X) for identifying, for example, the movement in a musical piece and the relative location of that movement, an indication of a change-over in the P-channel cue signal from "1" to "0" and vice versa, and the times of occurrences (or relative locations) of such change-overs. The manner in which this TOC data is generated will be described further below. In a preferred example, this TOC data is recorded sequentially in the track 3b, and not necessarily in alignment or even in association with the programme information recorded in the tracks 2. For example, first all of the P-channel TOC data may be recorded successively and in sequence in the track 3b, followed by all of the Q-channel TOC data (preferably of mode 1). Normally, it is expected that all of the TOC data will be recorded in substantially less than the full length of the track 3b and, moreover, will occupy less length of the tape 1 than is occupied by the audio information recorded in the tracks 2.

The manner in which the TOC data is generated and recorded on the tape 1 will be described with reference to three separate techniques:

(1) a so-called real time technique, wherein the TOC data is generated under the control of an operator while the operator is listening to the audio information played back from the tape 1;

(2) a so-called key-entered technique whereby substantially all of the TOC data is generated in response to operator control of a keyboard; and

(3) a so-called editing technique whereby the TOC data is generated in conjunction with an editing operation. Broadly all of the foregoing techniques result in the generation of a cue signal upon the occurrence of a predetermined characteristic in the audio information that is recorded on the tape 1. Such predetermined characteristics comprise, for example, the beginning of an audio programme, the end of that programme, a pause between programmes, and various intermediate portions included in a programme, such as a change from one movement of a musical piece to another. It is appreciated that other detectable features of the audio programme may be utilized as the predetermined characteristics upon which cue signals are generated.

Also in accordance with the broader aspects of the foregoing techniques, when a cue signal is generated, a time code signal is generated to represent the relative location on the tape 1 at which are recorded the aforementioned predetermined characteristics. This time code signal serves to address, or identify, the particular tracks 2 which are associated with the generated cue signal. As will be described, such time code signals may be generated by playing back the time code signals TC from the track 3a of the tape 1 or, alternatively, such time code signals may be generated by the manual operation of a keyboard. The manner in which the TOC data is derived and recorded will be explained in conjunction with the following description of each of the aforementioned TOC recording techniques.

Figure 5 is a block diagram of one apparatus for carrying out technique (1) wherein TOC data is recorded in real time. In this apparatus, the tape 1 is processed by a VTR 5 which is arranged to reproduce the audio PCM signals recorded in the tracks 2 and, moreover, is arranged to record TOC data in the track 3b. As illustrated, the VTR 5 is coupled to a PCM processor 9 which functions to recover the original audio analog signals from the audio PCM signals recorded on the tape 1, and to separate such audio signals into separate channels, such as left-channel and right-channel stereo signals. It is appreciated that if the audio PCM signals are recorded as 4-channel signals, the PCM processor 9 will process these signals in four separate channels. In Figure 5, the PCM processor 9 is coupled to amplifiers 12a and 12b which, in turn, drive loudspeakers 13a and 13b, respectively, to reproduce the audio sounds which have been recorded as signals in the skewed tracks 2 on the tape 1. Thus, the VTR 5 may be operated so as to play back the audio signals recorded on the tape 1 and to permit the user to listen to such reproduced audio sounds.

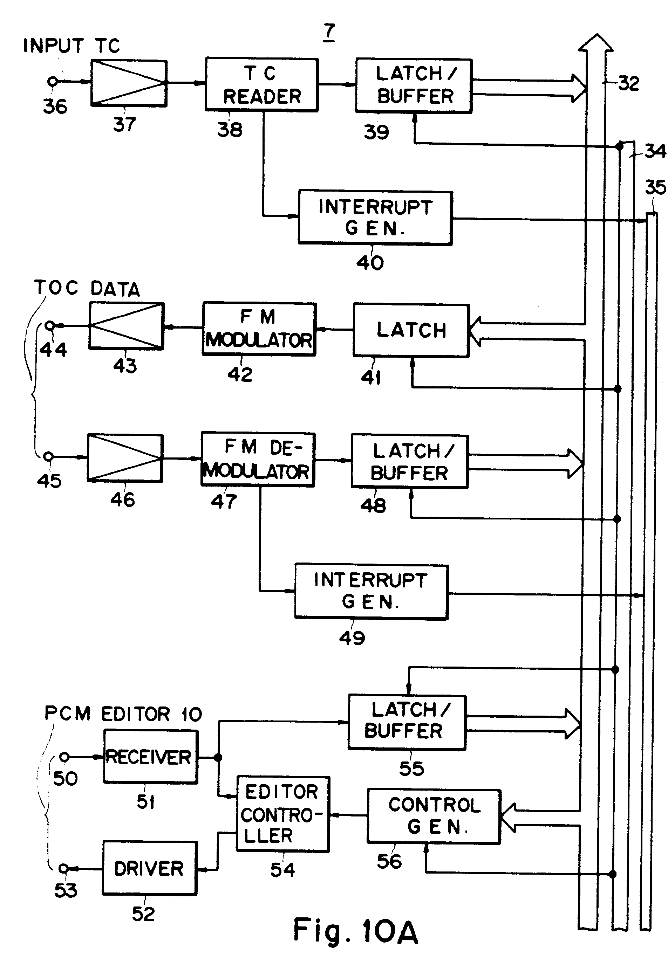

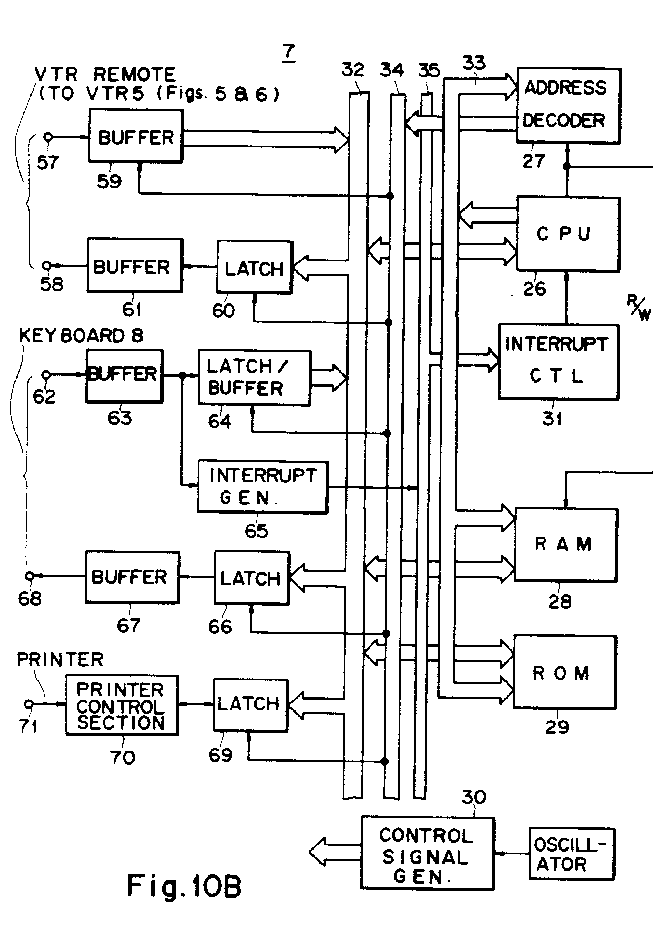

The VTR 5 is also coupled to a cue editor 7 which is described in greater detail hereinbelow with respect to Figures 10A and 10B. The cue editor 7 is coupled to a keyboard 8 which, under the control of an operator, serves to control the cue editor 7 to generate TOC data. The generated TOC data is supplied by the cue editor 7 to the VTR 5 for recording in the track 3b of the tape 1. As will be explained, the TOC data is generated in conjunction with time code signals (TC) which are reproduced from the tape 1 by the VTR 5 and supplied to the cue editor 7. As also illustrated in Figure 5, once the tape 1 has been recorded with TOC data thereon, the information recorded on the tape 1 may be reproduced, and the reproduced TOC data is supplied to the cue editor 7 so as to check and verify that the generated TOC data is correct and accurate.

In operation, the tape 1 having audio PCM signals recorded in the tracks 2 is played back by the VTR 5. At this time, it is assumed that the TOC data has not been recorded on the track 3b. The reproduced audio PCM signals are supplied by the VTR 5 to the PCM processor 9 whereat they are processed (including error correction, digital-to-analog conversion, and the like) to recover the original audio signals which are used to drive the loudspeakers 13a and 13b. Hence, as the audio information is played back from the tape 1, the operator listens to the audio information to sense predetermined characteristics therein, such as the beginning and end of audio programmes, different movements of musical pieces and the like. Concurrently with the playing of the audio PCM signals, the time code signals TC recorded on the track 3a are also played back and supplied to the cue editor 7.

When the operator senses a desired characteristic of the reproduced audio information, such as the beginning of an audio programme, a corresponding key on the keyboard 8 is actuated. The cue editor 7 is thus supplied with a signal representing the actuation of this key, and that signal is stored in a suitable memory together with the time code TC which had been reproduced at the time of the actuation of this key. Similarly, when the next desired characteristic of the reproduced audio information is sensed, such as a new movement of a musical piece, the end of an audio programme, a pause therein, or the like, a corresponding key on the keyboard 8 is actuated. Thus, the memory included in the cue editor 7 stores signals, sometimes referred to herein as cue signals, representing the actuation by the operator of respective keys of the keyboard 8, together with time code signals TC which identify the relative location along the tape 1 at which the characteristics represented by the cue signals are recorded.

After the tape 1 has been played back, or after the operator has reproduced a sufficient portion thereof, the VTR 5 is controlled, as by a suitable key on the keyboard 8, to rewind, or pre-roll, the tape 1 back to its beginning or other desired starting point. Then, the tape 1 is advanced and the cue signals stored in the memory of the cue editor 7 are recorded in the track 3b thereof.

As mentioned above, the TOC cue signals which are recorded in the track 3b include P-channel and Q-channel cue signals. These cue signals are recorded successively, for example, all of the P-channel cue signals are recorded, and then all of the Q-channel cue signals are recorded. Thus, the TOC signals recorded in the track 3b comprise the P-channel cue signals followed by the Q-channel cue signals. Hence, the tape 1 is recorded with the PCM and TOC signals, together with the time code signals TC previously recorded thereon, and may be used as the master tape from which the audio PCM disc is derived.

Figure 6 is a block diagram of apparatus to carry out technique (2) wherein the TOC data is generated in response to an operator-actuated keyboard. The apparatus shown in Figure 6 is substantially similar to that shown in Figure 5, except that the Figure 6 apparatus omits the PCM processor 9, the amplifiers 12a and 12b and the loudspeakers 13a and 13b.

In using the keyboard actuated apparatus of Figure 6, the operator notes the time codes reproduced from the tape 1 by the VTR 5 at the occurrence of each characteristic of the recorded programme information, such as the time code at the occurrence of the beginning of an audio programme, the end of that programme and changes within a musical peice from one movement to another. These notations may be made ahead of time and, for example, recorded on a suitable data sheet or form, such as by pencil and paper. Alternatively, these notations can be made by the operator when the magnetic tape having the audio programme information recorded thereon is played back, such as described above with respect to the apparatus of Figure 5. In any event, the keyboard 8 is operated by the operator so as to key into the memory of the cue editor 7 the TOC data representing each predetermined characteristic (for example, the beginning, end and intermediate portions of the respective audio programmes), together with the time codes representing the locations, or times of occurrence, of such predetermined characteristics. The TOC data is stored temporarily in the cue editor memory; and is read out therefrom when the VTR 5 is operated so as to record this TOC data on the track 3b of the tape 1. Thus, the apparatus of Figure 6 operates in an analogous manner to the operation of the apparatus of Figure 5 for recording successive TOC data in the track 3b, the recording of this data being independent on the actual locations on the tape 1 at which the characteristics identified by the TOC data are recorded. In both apparatus, and as mentioned above, first all of the P-channel TOC data is recorded and then all of the Q-channel TOC data is recorded. As will be explained below with reference to Figure 8, the TOC data is recorded in successive sectors, each sector containing cue information to identify particular characteristics in the audio programme and the relative locations on the tape 1 at which the characteristics are recorded. For example, each sector may contain TOC data relating to m characteristics. In the preferred apparatus, P-channel TOC data relating to a greater number of characteristics may be recorded in a sector than Q-channel TOC data.

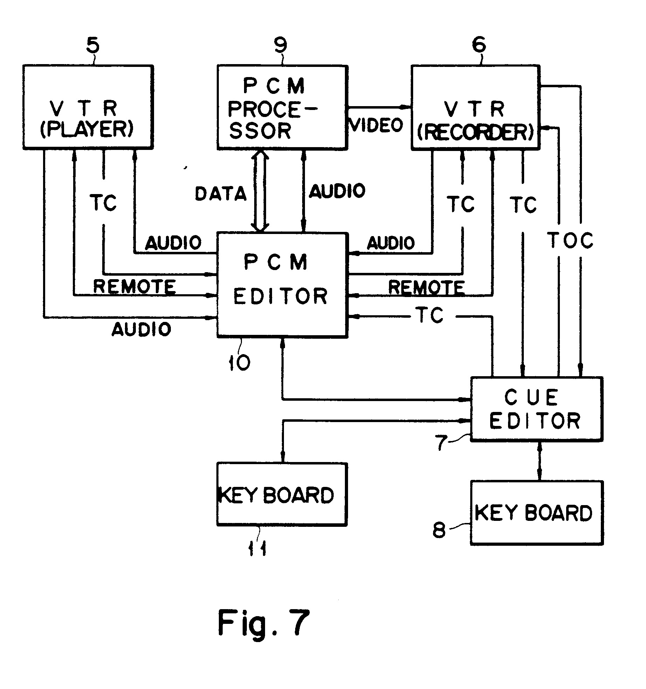

Figure 7 is a block diagram of apparatus to carry out technique (3) wherein TOC data is recorded in conjunction with an editing operation. In the illustrated apparatus, information played back from one magnetic tape (for example, the "playback" tape) by the VTR 5 is transferred to another magnetic tape (for example, the "recording" tape) for recording thereon by a VTR 6. A PCM editor 10 is coupled to both VTRs 5 and 6 and is responsive to the actuation of an editing keyboard 11 selectively to control the operation of the VTRs 5 and 6 so as selectively to transfer desired information from one magnetic tape to the other. Since the transferred, or edited, information is assumed herein to be audio PCM information, the editor 10 is referred to as a PCM editor.

The structure and operation of the PCM editor 10 may be conventional. Moreover, since the magnetic tape playback recording devices with which the PCM editor 10 is used may be VTRs, it will be appreciated that the PCM editor 10 may be similar to conventional video editors. Suffice it to say that, under the control of the keyboard 11, the PCM editor 10 controls the VTR 5 to access a desired audio programme (as by searching for the time code which serves as the address for that programme), play back that desired programme, and transfer the programme, via the PCM processor 9, to the recording magnetic tape operated on by the VTR 6. The PCM editor 10 also operates to control the VTR 6 to access a desired portion of the recording tape on which the transferred programme is to be recorded. This too is achieved by using the time code recorded on the recording tape to address the desired location. Hence, selected, or isolated, audio programmes may be transferred from the playback tape to the recording tape.

Moreover, the PCM editor 10 is arranged to control the VTRs 5 and 6 so as to carry out both "insert" and "assemble" editing operations. Accordingly, a selected programme reproduced by the VTR 5 may be "inserted" between two existing programmes already present on the recording tape processed by the VTR 6. Also, successive audio programmes reproduced by the VTR 5 may be "assembled", one after the other, on the recording tape by the VTR 6.

It will be appreciated that the PCM editor 10 functions to select editing points on both the playback tape processed by the VTR 5 and the recording tape processed by the VTR 6. These editing points identify the respective locations along the playback and recording tapes at which editing operations are to be carried out. Typically, such editing points are identified by the respective time codes recorded on the playback and recording tapes. Furthermore, and as is known, the editing points are referred to as "cut-in" and "cut-out" points which designate the starting and stopping locations, or time codes, on the playback and recording tapes. It will be understood that the cut-in point typically identifies the beginning portion of an audio programme and the cut-ut point typically identifies the end portion of that programme.

When an editing operation is carried out under operator-control of the keyboard 11, the various cut-in and cut-ut points selected by the operator may be displayed by suitable display devices provided on the cue editor keyboard 8. Furthermore, as selected audio programmes are transferred to the VTR 6 and recorded on the recording tape thereby, a recording tape time code is generated by the PCM editor 10 for recording on this recording tape. This recording tape time code also may be displayed on the keyboard 8.

The keyboard 8 may be operator controlled so as to effect operation of the cue editor 7 and the VTR 6 in a manner similar to that described hereinabove with respect to Figures 5 and 6. Thus, under the control of the keyboard 8, the VTR 6 may be rewound, or pre-rolled, to play back desired ones of the edited programmes recorded on the recording tape. Actuation of suitable keys, or switches on the keyboard 8 serves to identify predetermined characteristics of the played back programme, and the locations of such characteristics are identified by the time code read from this tape. For example, suitable keys may be actuated upon detecting the beginning and end of a programme, as well as changes in the movement of the musical piece. The relative locations of such beginning and end portions, as well as the locations in the change in movements, are identified by the played back time codes. In addition, the keyboards 8 and 11 both may be operated during an editing operation so as to transfer desired programmes from the playback tape to the recording tape and, moreover, the beginning and end portions of such programmes (that is, the cut-in and cut-out points) also may be identified, together with their relative locations on the recording tape. As mentioned above, the cue signals which identify such portions, or characteristics, together with the time codes which identify the relative locations thereof, are stored in the memory of the cue editor 7 for recording as TOC data on the recording tape by the VTR 6. After an edit operation has been completed, and after the operator has identified those characteristics of the transferred audio programme with which he is interested, the cue editor 7 is controlled by the keyboard 8 to operate the VTR 6 so as to rewind the magnetic tape processed thereby and then record in, for example, the track 3b, the TOC data stored in the cue editor memory. As in the apparatus described above, the TOC data is recorded successively, for example, in successive sectors, at locations in the track 3b which are independent of the actual locations of the characteristics in the tracks 2 at which such characteristics are recorded.

In all of the apparatus shown in Figures 5 to 7, the magnetic tape having TOC data recorded thereon may be played back in order to check and verify that the recorded TOC data corresponds to the TOC data which had been selected by the operator. As one example, the TOC data stored in the memory of the cue editor 7 may be compared to the TOC data reproduced from the tape 1, and an indication of this comparison may be provided. As another example, the reproduced TOC data may be displayed and compared, or verified, by the operator as being the TOC data which he had selected. It will be appreciated that various other arrangements may be provided to verify that the TOC data recorded on the tape 1 is the same, or substantially the same, as the TOC data which had been selected by the operator.

Referring now to Figures 8A to 8E, there is schematically illustrated therein a representation of the format in which the TOC data is recorded in, for example, the track 3b of the tape 1. Preferably, this TOC data is recorded as a frequency modulated (FM) signal. As mentioned above, TOC data is generated by the operation of respective keys provided on the keyboard 8 in conjunction with time code data that is read from the tape 1. Let it be assumed that a basic element of the TOC data is a multi-byte sub-block, or word, which, for the P-channel cue signal, includes a flag signal representing, for example, the beginning of an audio programme and the end of an audio programme, and also includes time code data representing the relative location (or time of occurrence) along the magnetic tape at which the audio programme begins or ends. This P-channel TOC data is, of course, stored in the memory of cue editor 7 as it is generated. Also stored in the memory of the cue editor 7 is the Q-channel TOC data whose sub-block includes a mode flag (for example, mode-1 or mode-2), control data representing the number of channels (for example, 2-channels or 4-channels) of the audio signals and whether those signals had been emphasized, a programme number (MNR), an index number (X) and time code data representing the relative location (or time of occurrence) of the beginning, end or intermediate portion of an audio programme on the magnetic tape.

Normally, the number of P-channel and Q-channel sub-blocks which are generated in response to the operator-actuated keyboard is well within the capacity of the cue editor memory. Preferably, a number of such sub-blocks are recorded in each of the respective sectors illustrated in Figure 8A. However, it is possible that the total number of P-channel and Q-channel sub-blocks exceeds the cue editor memory capacity. In that event, the excess number of sub-blocks will be recorded in one or more additional sectors. Figure 8A represents a preferred format by which such excessive sub-block generation may, nevertheless, be accommodated and recorded by the cue editor 7. This format includes a preamble 12 to identify the beginning of TOC data, followed by N separate sectors, each sector being arranged to contain a number of sub-blocks therein (to be described in greater detail below), followed by a mid-amble 13 which is provided to indicate that a number of P-channel and Q-channel sub-blocks exceeds the capacity of the cue editor memory, followed by additional sectors in which such excessive sub-blocks are recorded, and terminated by a post-amble 14 to indicate the end of the TOC data. Preferably, the P-channel sub-blocks are recorded first, such as in sector 1, sector 2, and so on, followed by the recording of the Q-channel sub-blocks in, for example, sector 3, sector 4, .... sector N.

It is recognized that the number of P-channel and Q-channel sub-blocks which are generated for each tape is a function of the number of audio programmes recorded on that tape, the different movements in each musical piece, and other characteristics of the recorded information as may be detected by the operator. Hence, the amount of TOC data may vary from tape to tape and, in some instances, the total amount of TOC data may be recorded in less than N sectors, while in other cases the total number of TOC data may be recorded in more than N sectors. The mid-amble 13 is omitted if the total amount of TOC data is recorded in N sectors or less, that is, if the total amount of TOC data does not exceed the memory capacity of the cue editor memory. Nevertheless, whether the mid-amble 13 is included or not, the TOC data is bracketed between the preamble 12 and the post-amble 14.

As best shown in Figure 8B, he preamble 12 comprises the following sub-sections, arranged in order:

GAP 0 A pulse signal of the TOC data clock rate is provided in the GAP 0, which is arranged to dispose in a stand-by condition the TOC data recovery circuits that are used in recording a record disc. Such recovery circuits include a phase-locked loop for recovering the frequency modulated TOC data and also a window pulse forming circuit that is used to separate the essential P-channel and Q-channel cue signals from the format illustrated in Figure 8A. These circuits are placed in their respective stand-by conditions in response to the signal which is recorded in the GAP 0 sub-section. As an example, if a byte comprises eight bits, then the GAP 0 exhibits a duration of five bytes.

SYNC This sub-section is provided with a synchronizing clock signal which is used by the phase-locked loop included in the FM demodulator of the TOC data recovery circuits in order to synchronize the phase-locked loop with the played back TOC data. The duration of the SYNC sub-section is four bytes.

IM 1 This sub-section provides the Index Mark to indicate the beginning of the TOC data. The duration of the IM 1 sub-section is one byte.

GAP 1 The purpose of this sub-section is to provide sufficient tolerance to accommodate rewritten TOC data in the event that the rewritten data occupies greater space than the original. This may occur in the event that, during rewriting, the tape speed is not precisely the same as during the original data writing operation. The duration of the GAP 1 sub-section is 22 ± 2 bytes.

Figure 8B illustrates the format of each sector in which the P-channel and Q-channel cue signals are recorded. Each sector is divided into an ID field followed by a data field. The ID field serves to identify the sector number (that is, sector 1, sector 2, ... sector N) and the tape number in the event that, for example, two or more master tapes are used in the production of record discs. The data field contains the actual P-channel or Q-channel sub-blocks. The ID field is formed of the following sub-sections, in order:

SYNC The purpose of this SYNC sub-section is the same as the SYNC sub-section described above with respect to the preamble 12.

AM 1 This Address Mark sub-section identifies the ID field and is of a duration equal to one byte.

SECTOR NO This sub-section identifies the particular sector number in which it is contained, and is formed of two bytes to identify a sector from 0 to, for example, 65,535.

TAPE NO This TAPE NO identifies the particular master tape (for example, master tape 1, 2, etc) on which the TOC data are recorded.

CRC This CRC code is conventional and is used for the purpose of error checking and correction of the information recorded in the ID field of the sector.

The ID field is separated from the data field by the GAP 2 sub-section. The GAP 2 sub-section is of an interval equivalent to 22 ± 2 bytes and serves to provide a tolerance in the event that the TOC data is rewritten. In this regard, the GAP 2 sub-section is similar to the aforementioned GAP 1 sub-section.

The data field included in each sector has recorded therein either P-channel or Q-channel cue signals. In particular, the data field is provided with the following sub-sections, in order:

SYNC The purpose of this SYNC sub-section is similar to that of the SYNC sub-section included in the ID field. Accordingly, the data field SYNC sub-section is provided with a signal by which the TOC data recovery circuits are phase-locked to the frequency modulated TOC data.

AM 2 This Address Mark sub-section is of a duration equal to one byte and indicates whether the P-channel or the Q-channel cue signals included in the data field are invalid and should be ignored, or whether these signals are valid and represent proper cue data. For example, if the TOC data recorded in the track 3b is revised, as during another cue edit operation, it is possible that TOC data which had been recorded previously might not be erased. Nevertheless, this previous TOC data should be identified as being invalid so as to be ignored during the production of a record disc. The address mark included in this AM 2 sub-section serves to provide such an identification.

DIM This Data Identification Mark identifies the TOC data recorded in this sector as being either P-channel cue data or Q-channel due data. If the latter, the Data Identification Mark also identifies the mode (for example, Q mode-1 or Q mode-2). The Data Identification Mark preferably comprises one byte which, in decimal form, may be equal to 10 to identify P-channel cue data, 20 to identify Q-channel (mode-1) cue data and 21 to identify Q-channel (mode-2) cue data.

Figure 8E illustrates a table which indicates the data identification mark representation of the respective cue data signals. Although not shown, it will be appreciated that the data identification mark also may represent the R-channel, S-channel, ... W-channel cue signals by other decimal identifying representations.

LENGTH This sub-section, which comprises one byte, represents the length of each P-channel or Q-channel sub-block or word, in the next-following data sub-section of the data field. For example, each P-channel sub-block, or word, comprises five bytes. Each Q-channel sub-block, or word (both mode-1 and mode-2) comprises eight bytes. The LENGTH sub-section of the data field indicates the number of bytes per sub-block, or word.

DATA The data sub-section comprises 128 bytes. Since each P-channel sub-block, or word, comprises five bytes, it is appreciated that twenty-five P-channel sub-blocks, or words, may be included in the DATA sub-section, with the remaining three bytes therein being unused. Conversely, since each Q-channel sub-block, or word, comprises eight bytes, it is appreciated that sixteen Q-channel sub-blocks, or words, may be included in the DATA sub-section. In a preferred arrangement, the DATA sub-section of a sector is provided with only P-channel sub-blocks, or words, or with only Q-channel sub-blocks, or words. Preferably a DATA subsection is not provided with a mixture of both P-channel and Q-channel sub-blocks, or words. Furthermore, although a maximum of twenty-five P-channel sub-blocks, or words, and a maximum of sixteen Q-channel sub-blocks, or words, may be provided in the data sub-section, it is possible that less than this maximum amount may actually be provided. It is appreciated, particularly with reference to the Q-channel sub-blocks, or words, that the total number of sub-blocks, or words, included in the data sub-section is a function of the number of audio programmes (MNR) and index numbers (X) which are generated by the operator. Thus, the actual number of sub-blocks, or words, included in the DATA sub-section is a function of the number of detected characteristics included in the audio programmes recorded on the magnetic tape.

CRC The CRC code comprises two bytes and is used to detect errors in the data field when the TOC data is reproduced or otherwise processed.

GAP 3 This gap comprises 23 ± 3 bytes and provides some tolerance in the event that the TOC data is rewritten. In this regard, the GAP 3 is used for a purpose similar to that described above for the GAP 2.

The remaining sectors likewise comprise ID and data fields similar to that just described for sector 1. The mid-amble 13 is provided immediately following the sector N. As illustrated in Figure 8C, the mid-amble 13 is formed of the following sub-sections, in order:

SYNC This SYNC sub-section is similar to the SYNC sub-section included in the preamble 12, and described above.

IM 2 This Index Mark sub-section indicates that further data-containing sectors follow the mid-amble 13. Of course, and as mentioned above, if all of the TOC data is accommodated in the N sectors following the preamble 12, then the mid-amble section 13 is not needed; and the sectors (N+1) and so on are omitted.

GAP 4 This gap comprises 27 ±2 bytes and serves a purpose similar to that served by the preceding gaps.

If the mid-amble section 13 is provided, additional sectors follow, each sector being of the type shown in Figure 8B and containing ID and data fields. These additional sectors will be provided only for so long as the P-channel and/or Q-channel sub-blocks, or words, are generated and recorded. Preferably, there is not a fixed number of sectors either between the preamble 12 and the mid-amble 13, or between the mid-amble 13 and the post-amble 14. Following the last recorded sector, the post-amble 14 is provided.

As illustrated in Figure 8D, the post-amble 14 includes the following sub-sections, in order:

SYNC This SYNC sub-section is similar to, and is arranged to perform the same function as, the SYNC sub-section included in the preamble 12 and the mid-amble 13.

IM 3 This Index Mark comprises one byte indicating the end of the TOC data.

GAP 5 This GAP exhibits a length equal to about twenty-seven bytes and confirms the end of the TOC data.

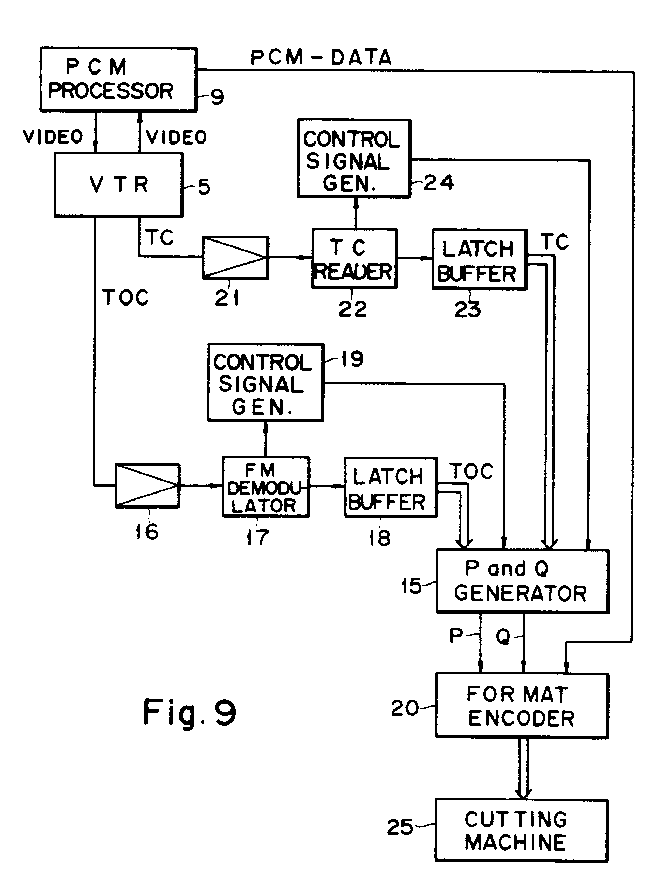

A master tape of the type illustrated in Figure 4 containing TOC data recorded in the format shown in Figure 8 is advantageously used to produce, or "cut", as by laser cutting techniques, a "mother" disc from which a "stamper" disc is made to stamp replica discs. These disc are, in the exmaple described herein, audio PCM discs. It is appreciated that the audio PCM data recorded on the disc produced from the master tape contains the same audio PCM data that had been recorded on the master tape. The disc also includes the cue data which is derived from the TOC data in the track 3b of the master tape. Of course, the format of this cue data may differ from the TOC data, and the format preferably is of the type illustrated in Figure 2. It is recalled that this cue data is multiplexed with the audio PCM data as shown in Figure 1. One apparatus which is used to produce a record disc from the master tape is illustrated in Figure 9.

Figure 9 includes an FM demodulator 17 coupled to the VTR 5 to receive the TOC data which is reproduced from the master tape by the VTR 5. The frequency modulated TOC data is demodulated by the FM demodulator 17 and is supplied to a P and Q generator 15 via a latch buffer 18. In addition, a time code reader 22 is coupled to the VTR 5 to receive the time code signals red from the master tape by the VTR 5. These time code signals also are supplied to the P and Q generator 15 via a latch buffer 23.

The P and Q generator 15 includes a memory (not shown) in which the TOC data is stored. To facilitate a clocking in and subsequent reading out of this data with respect to the memory, control signal generators 19 and 24 are coupled to the FM demodulator 17 and the time code reader 22, respectively. The control signal generators 19 and 24 are similar in that they extract from the demodulated TOC data and the reproduced time code signals timing pulses which are synchronized with such TOC data and time code signals. As illustrated, these timing pulses are supplied to the P and 3 generator 15 to synchronize the writing thereinto and the reading therefrom of the TOC data.

Preferably, the P and Q generator 15 includes, in addition to a memory, a processor by which the TOC data described above with respect to Figure 8 and the time code data are converted to the P-channel cue signals shown in Figure 3B and to the Q-channel cue signals shown in Figures 2A to 2C.

As also illustrated in Figure 9, the PCM processor 9 is coupled to the VTR 5 so as to recover the audio PCM information when the master tape is played back by the VTR 5. This audio PCM information is supplied, together with P-channel and Q-channel cue signals from the P and Q generator 15, to a format encoder 20. The format encoder 20 rearranges the audio PCM data, the P-channel cue signals and the Q-channel cue signals (as well as the R-channel...W-channel cue signals) in the format illustrated in Figure 1B. Once in this format, the cue data and audio PCM data are supplied to a cutting machine 25 for cutting the "mother" disc.

In operation, the master tape is first played back by the VTR 5 so as to load the P and Q generator 15 with the TOC data that is reproduced from the track 3b of the master tape. Hence, the memory in the P and Q generator stores, for example, a P-channel cue signal indication of the beginning and end of each audio programme, as well as the time code address of each such beginning and end. This memory also stores a Q-channel cue signal indication of the number (MNR) of each audio programme and the time code address of the beginning of each such programme. Furthermore, this memory stores each Q-channel cue signal of each index number (X) in each audio programme, and the time code address of each such index.

After the TOC data is loaded into the P and Q generator 15, the master tape is pre-rolled to its beginning, or starting point, and then the audio PCM data recorded thereon is reproduced. As the time code is read from the master tape during its reproduction, the P-channel and Q-channel cue signals produced by the P and Q generator 15 are read from the memory therein, multiplexed with the audio PCM data and arranged in the format shown in Figure 1B for recording on the "mother" disc.

In addition to rearranging the audio PCM data and cue data in the format shown in Figure 1B, the format encoder 20 also functions to detect and correct errors in the audio PCM data. Also, the frame synchronizing signal, or pattern, shown in Figures 1A and 1B, is generated and inserted into the signals which are recorded on the "mother" disc. Thus, the TOC data which is recorded on the track 3b is reproduced from the master tape, multiplexed with the reproduced audio PCM data and recorded on the "mother" disc in the same tracks as the audio PCM data, and at the appropriate locations which correspond to the characteristics that are identified by the cue data. The resultant cue data which is recorded on the record disc is of the type described in detail hereinabove with respect to Figures 1 to 3.

Figures 10A to 10B are a block diagram of one example of the cue editor 7. The cue editor 7 comprises a microcomputer including a central processing unit (CPU) 26, an address decoder 27, a random access memory (RAM) 28, a read only memory (ROM) 29 and an interrupt control circuit 31, all shown in Figure 10B. An address bus 33 interconnects the CPU 26 with each of the address decoder 27, the RAM 28 and the ROM 29. In addition, and as illustrated, a read/write control over the RAM 28 is effected by the CPU 26. A control signal generator 30 is supplied with a periodic signal by an oscillator to generate clock and timing control signals for use in the microcomputer.

The microcomputer is arranged to receive signals from the keyboard 8 and time code signals from the VTR, to generate TOC data therefrom and to supply this TOC data to the VTR for recording on the magnetic tape. In addition, the microcomputer is arranged to command the VTR to carry out record and playback operations, and when the cue editor 7 is used in conjunction with a PCM editor 10, as shown in Figure 7, the microcomputer is arranged to communicate with the PCM editor 10. To this effect, a data bus 32 is coupled to the CPU 26 and the RAM 28 in order to supply data to the microcomputer and to receive TOC data, as well as other function control data therefrom. An input/output (I/O) select bus 34 is coupled to the address decoder 27 and is arranged to permit data to be supplied to the data bus 32 from various ones of the external devices with which the cue editor 7 is used, and also to receive data from such devices. This data interchange is controlled by the CPU 26 in accordance with the program therefor stored in the ROM 29.

In addition, an interrupt bus 35 is coupled to the interrupt control circuit 31 to receive interrupt request signals from various ones of the external devices with which the cue editor 7 is used.

As illustrated in Figure 10A, time code signals which are reproduced from the magnetic tape are supplied to the data bus 32 and, thence, to the RAM 28. The time code signals are received from the VTR at an input terminal 36 from which they are amplified by an amplifier 37, read by a time code reader 38 and temporarily stored in a latch buffer 39. Upon reading a time code signal, the time code reader 38 also actuates an interrupt generator 40 which supplies an interrupt request via the interrupt bus 35 to the interrupt control circuit 31. When the microcomputer acknowledges this request, the address decoder 27 supplies, via I/O select bus 34, an enable signal to the latch buffer 39, whereupon the time code signal stored in the latch buffer 39 is supplied to the data bus 32 for storage in the RAM 28.

Referring to Figure 10B, the keyboard 8 is coupled to an input terminal 62 of the illustrated cue editor 7. When the keyboard 8 is actuated, a suitable signal representing the particular key which is operated is supplied to the input terminal 62 and thence to a latch buffer 64 via a buffer amplifier 63. The key signal supplied to the latch buffer 64 also serves to actuate an interrupt generator 65 which, in turn, provides an interrupt request to the interrupt conrol circuit 31 via the interrupt bus 35. When the microcomputer acknowledges this interrupt request, the address decoder 27 enables the latch buffer 64 via the I/O select bus 34, to supply the key signal stored in the latch buffer 64 to the RAM 28.

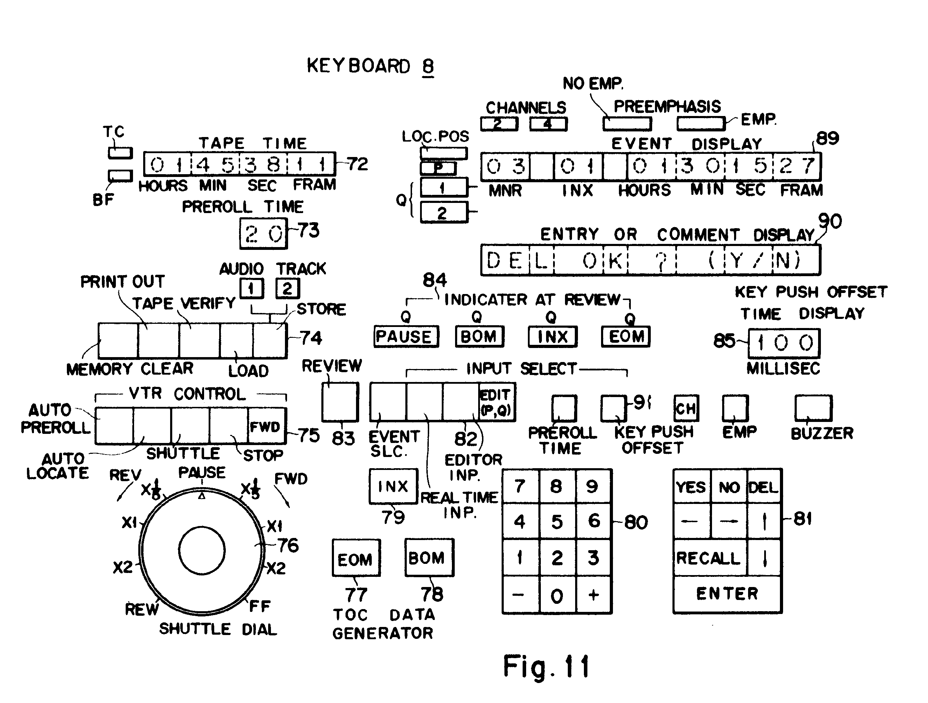

As will be described below with respect to Figure 11, the keyboard 8 also includes various displays and indicators. When a cue edit operation is carried out, selected ones of these displays and indicators are energized. Display data is supplied from the CPU 26 to the RAM 28 and thence from the RAM 28 to a latch circuit 66 via the data bus 32. The latch circuit 66 is controlled by the address decoder 27 via the I/O select bus 34, and, when enabled, supplies display data to an output terminal 68 via a buffer amplifier 67. Hence, the appropriate display or indicator device included in the keyboard 8 is actuated to indicate to the operator the operation then carried out.

Returning to Figure 10A, the keyboard supplied signals and time code signals supplied to the microcomputer from the keyboard 8 and from the VTR are used by the microcomputer to generate the TOC data described above and shown in the format illustrated in Figure 8. This TOC data is stored in the RAM 28 and supplied therefrom via the data bus 32 to a latch circuit 41 (Figure 10A). The latch circuit 41 operates under the control of the address decoder 27 via the I/O select bus 34 to supply this TOC data to an FM modulator 42. Hence, the TOC data is frequency modulated and supplied to the VTR via a buffer amplifier 43 and output terminal 44. The frequency modulated TOC data is recorded in the track 3b of the tape 1.

As mentioned above, the TOC data may be reproduced from the tape 1 in order to compare and confirm that the TOC data which is recorded thereon is the same TOC data which had been selected by the operator. The reproduced TOC data is supplied to the microcomputer for comparison therein. As shown in Figure 10A, such reproduced TOC data is supplied to an input terminal 45 and supplied by an amplifier 46 to an FM demodulator 47. The demodulated TOC data is then temporarily stored in a latch buffer 48. When the TOC data is stored in the latch buffer 48, an interrupt generator 49 is actuated to supply an interrupt request to the interrupt control circuit 31 via the interrupt bus 35. When the microcomputer acknowledges this interrupt request, the latch buffer 48 is actuated to supply the reproduced TOC data to the RAM 28 via the data bus 32. The reproduced data stored in the RAM 28 is then compared by the CPU 26 with the desired TOC data which had been produced in response to the actuation of the keyboard 8 and time code signals read from the VTR, this desired TOC data also being stored in the RAM 28. An indication of the compared TOC data is provided by the keyboard 8 in response to display signals supplied thereto by the microcomputer.

When used with the PCM editor 10, the cue editor 7 shown in Figures 10A and 10B is coupled to the PCM editor 10 via an input terminal 50 and an output terminal 53. Signals, such as the editing point signals described above, are supplied from the PCM editor 10 to the input terminal 50, received by a receiver 51 and supplied therefrom both to an editor controller 54 and a latch buffer 55. The editing points are supplied via the data bus 32 to the RAM 28 when the latch buffer 48 is actuated by the address decoder 27 which supplies an actuating signal thereto via the I/O select bus 34. Also, the address decoder 27 actuates a control generator 56 to receive signals supplied thereto via the data bus 32 from the RAM 28 or from the CPU 26, these signals also being supplied to the editor controller 54. The editor controller 54 responds to the signals supplied thereto from the receiver 51 and also from the control generator 56 to supply suitable signals to the output terminal 53 via a driver 52. Although not described in detail herein, it should be appreciated that indications of editing points, as represented by time code signals, are supplied from the PCM editor 10 to the input terminal 50 and thence to the microcomputer of the cue editor 7, and the microcomputer supplies corresponding display signals representing such time code signals to the display and indicator devices of the keyboard 8. Also, representations of the actuation of certain ones of the keys of the keyboard 8, illustrated in Figure 11, are supplied to the microcomputer of the cue editor 7 which, in turn, applies corresponding VTR control signals to the PCM editor 10 via the driver 52 and the output terminal 53. Hence, the operation of the keyboard 8 results in selected operation of, for example, the recording VTR (such as the VTR 6 of Figure 7) via the PCM editor 10.

In Figure 10A, the editor controller 54 is arranged to generate synchronizing and clock signals for the PCM editor 10. Thus, signals which are supplied to the PCM editor 10 from the micromputer, as in response to the selected operation of the keyboard 8, are properly synchronized with the PCM editor 10.

The cue editor 7 is coupled to, for example, the VTR 5 (Figures 5 and 6) via terminals 57 and 58 shown in Figure 10B. The terminal 58 supplies VTR control signals to advance the magnetic tape therein and receives from the VTR 5 signals representing the status or operating condition thereof. The signals received from the VTR 5 at the terminal 57 are supplied by a buffer 59 to the data bus 32 when the buffer 59 is actuated by the address decoder 27 via the I/O select bus 34. Control signals supplied to the VTR 5 from the terminal 58 are supplied from the microcomputer to the data bus 32 and thence to a latch circuit 60. The latch circuit 60 is actuated under the control of the address decoder 27 via the I/O select bus 34 to supply the control signals stored therein to the terminal 58 via a buffer amplifier 61. Thus, the cue editor 7 communicates with the VTR 5 to control the operation thereof.

The microcomputer is also coupled to a printer which is arranged to provide a printed record of TOC data verification. A printer control section 70 is coupled to a terminal 71, and the printer control section 70 bidirectionally communicates with a latch circuit 69. The latch circuit 69 is coupled to the data bus 32 to receive data from the microcomputer to control the printer control section 70. The latch circuit 69 is actuated under the control of the address decoder 27 via the I/O select bus 34.

Turning now to Figure 11, there is illustrated a schematic, plan representation of one example of the keyboard 8. The keyboard 8 is provided with various manually actuable keys, or switches, and also with indicators and display devices which are useful in carrying out cue edit operations. As illustrated, a time code display 72 is arranged to display the time code, in terms of hours, minutes, seconds and frames, which is reproduced by the VTR. The reproduced time code is supplied to the microcomputer shown in Figures 10A and 10B from the input terminal 36, and the microcomputer supplies the time code display 72, via the output terminal 68 (Figure 10B) the time code display signals. As the tape 1 is advanced, or rewound, a corresponding update in the displayed time code ensues.

In addition, a pre-roll time display 73 is provided to display the length of the tape 1 which is pre-rolled during particular cue editing operations.

The keyboard 8 is also provided with cue editing switches 74, two of which are illustrated as a LOAD switch and STORE switch. When the LOAD switch 74 is operated, TOC data is stored, or loaded into, the RAM 28. This TOC data may be produced as a function of the time code then reproduced from the tape 1, in combination with the actuation of a particular TOC data generator switch, to be described. When the STORE switch of the cue edit switches 74 is actuated, the TOC data stored in the RAM 28 is recorded onto the track 3b of the tape 1 for storage thereon.

VTR control switches 75, together with a shuttle dial 76, are provided in order to control the operation of the VTR 5 with which the cue editor 7 is used. For example, the VTR control switches 75 may include an AUTO LOCATE switch which, when actuated, serves to advance the tape 1 to a desired, or predetermined, time code address. The shuttle dial 76 is bidirectionally operable to advance or rewind the tape 1 at a slow, normal, fast or very fast speed, as desired.

TOC data generator switches include an END-OF-MUSIC (EOM) switch 77, a BEGINNING-OF-MUSIC (BOM) switch 78 and an INDEX (INX) switch 79. Normally, the operator will actuate a respective one of the switches 77 to 79 upon detecting a corresponding portion of the audio programme which is reproduced from the tape 1. For example, at the beginning of an audio programme, the BEGINNING-OF-MUSIC switch 78 is actuated. The actuation of the switch 78 results in the generation of TOC data which, when the LOAD cue editing switch 74 is actuated, loads the generated TOC data into the RAM 28. Likewise, when the end of an audio programme is sensed, the END-OF-MUSIC switch 77 is actuated, and this too results in the generation of corresponding TOC data. When a particular characteristic, such as a change in movement of a musical piece, or the like, is sensed, the operator will actuate the INDEX switch 79. This too results in the generation of TOC data, and will be described further hereinbelow.

A numerical key pad 80 is provided to enable the operator to enter manually a desired time code. The key pad 80 is normally used when TOC data is generated by the apparatus shown and described with reference to Figure 6.

Function control keys 81 are provided and are used for verifying TOC data, and for controlling a cue edit display.

Editing mode selector switches 82 are provided to select the particular mode in which the cue editor 7 is to operate. For example, when operating in accordance with technique (1), as implemented by the apparatus of Figure 5, a REAL TIME INPUT switch is actuated. When operating in accordance with technique (2), as implemented by the apparatus shown in Figure 6, an EDIT switch is operated. Finally, when operating in accordance with technique (3), as implemented by the apparatus shown in Figure 7, and as used with a PCM editor, an EDITOR INPUT switch is operated.

A REVIEW switch 83 is operable to reproduce the TOC data that is recorded on the tape 1 so as to compare and verify that the recorded TOC data corresponds to the TOC data which has been selected by the operator. During this review mode, when a particular Q-channel cue signal is reproduced, a respective one of indicators 84 is energized to appraise the operator of the particular characteristic which is represented by the recorded Q-channel cue signal. The indicators 84 are arranged to indicate "pause", "BOM" (beginning of an audio programme), "INX" (characteristics such as a change in movement) and "EOM" (end of audio programme) indications respectively.

An offset display 85 also is provided. the offset display 85 provides a display, such as in milliseconds, of the offset reaction time between the occurrence of a predetermined characteristic and the actuation by the operator of a respective TOC data generator switch. This offset, which may be preset and adjusted, as desired, by the operator, serves to cancel the expected delay between detection and operator action.

An event display 89 is arranged to display the TOC data which is generated by, for example, the actuation of TOC data generator switches 77 to 79. The event display 89 may display P-channel cue signals or Q-channel cue signals, the latter in either mode-1 or mode-2, depending upon the actuation of selector switches disposed to the side of the event display 89. As shown in Figure 11, the event display 89 here displays the audio programme number (MNR=03), the index number (X=01) and the time code at the time X=01, this time code indicating one hour, thirty minutes, fifteen seconds and twenty-seven frames.

A data entry or comment display 90 is provided to display various controls and functions of the cue editing operation, the comment display 90 cooperating with the function control keys 81.

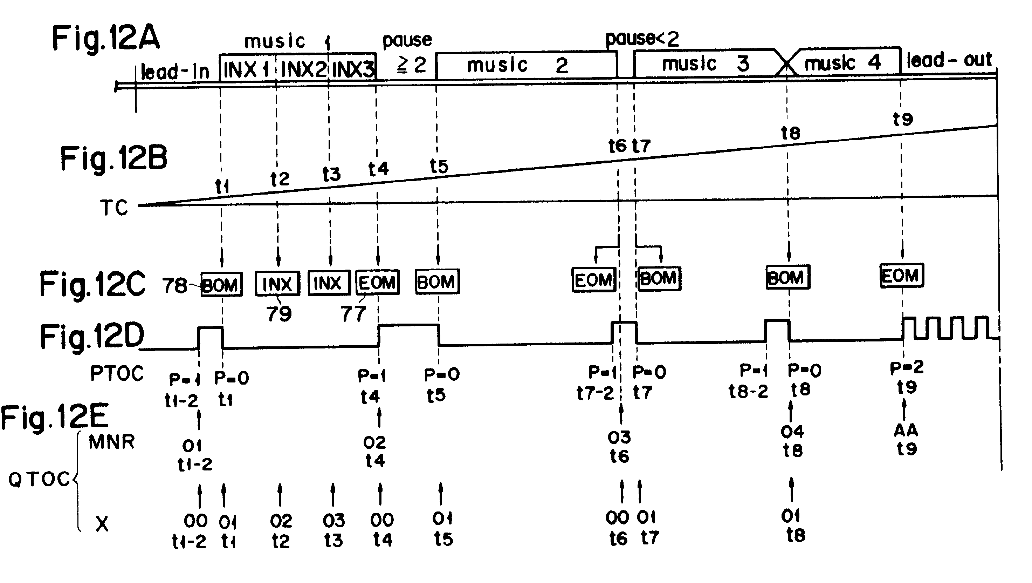

The manner in which the keyboard 8 illustrated in Figure 11 is operated in order to produce TOC data now will be described in conjunction with the timing diagrams shown in Figures 12A to 12E. Figure 12A is a schematic representation of the audio PCM signals which are reproduced from the tape 1. It is seen that these signals are similar to those shown in Figure 3A. Thus, following a lead-in portion on the tape 1, a first audio programme (music 1) is reproduced. As an example, it is assumed that this programme is a musical piece having three separate movements, these movements being identified as INX 1, INX 2 and INX 3, respectively. Then, after a pause which is greater than two seconds, the second audio programme (music 2) is reproduced. Thereafter, following a pause of less than two seconds, a third audio programme (music 3) is reproduced; and this third audio programme is cross-faded into a fourth audio programme (music 4). Finally, a lead-out portion is provided on the tape 1. Figure 12B represents an analog version of the time code which is reproduced from the tape 1 as the tape 1 is advanced from its lead-in portion, through the respective audio programmes to its lead-out portion.

Let it be assumed that the cue editing operation is to be carried out in accordance with technique (1), and REAL TIME INPUT switch of the edit mode switches 82 is operated. This technique (1) is implemented by the apparatus shown in Figure 5, and it is recalled that, in accordance with this cue editing mode, the audio information is reproduced and, when predetermined characteristics therein are detected by the operator, appropriate ones of the TOC data generator switches are operated.

Following the lead-in portion, the operator detects the beginning of the audio programme (music 1) at time t1. Accordingly, the operator actuates the BOM switch 78. At that time, the RAM 28 stores a P-channel cue signal equal to "0" and also stores the time code corresponding to time t1. In addition, the identity of the BOM switch 78 is stored. Furthermore, since this is the first audio programme, the RAM 28 also stores the Q-channel cue signal MNR=01. In addition, since this is the first movement in this programme, the RAM 28 additionally stores the Q-channel cue signal X=01. In one example, although not stored in the RAM 28, when the TOC data is recorded on the tape 1, the time code at two seconds prior to time t1 (that is, t1-2) is recorded, together with the P-channel cue signal P="1" at time t1-2. Also, the cue editor will record on the tape 1 the Q-channel cue signals (MNR=01) at time t1-2 and (X=00) also at time t1-2, even although these Q-channel cue signals might not be stored in the RAM 28. Such Q-channel cue signals are generated automatically.

It is assumed that at time t2 the INDEX switch 79 is actuated when the operator detects a change in the movement of the musical piece. Hence, the Q-channel cue signal (x=02) at time t2 is stored in the RAM 28. Likewise, at time t3, the INDEX switch 79 is actuated once again upon detection of a change in the movement of the musical piece. Consequently, the Q-channel cue signal (X=03) at time t3 is stored in the RAM 28.

At time t4 the first audio programme ends. Hence, the operator actuates the EOM switch 77, resulting in the storage in the RAM 28 of the P-channel and Q-channel cue signals at time t4 of P=1, MNR=02 and X=00.

When the beginning of the next audio programme is detected at time t5, the operator actuates the BOM switch 78. Accordingly, the P-channel and 3-channel cue signals now generated are P=0 and X=01. These signals are stored in the RAM 28 together with the time code representation of t5. It is seen from Figure 12E that the audio programme number (MNR) changed at the end of the previous audio programme, and will not be updated until the completion of this second audio programme.

At time t6 the operator detects the end of the second audio programme and actuates the EOM switch 77. At that time, the following P-channel and Q-channel cue signals are generated: P=1, MNR=03 and X=00. Also, the time code representation of time t6 is generated. These signals are stored in the RAM 28.

At time t7, the operator detects the beginning of the third audio programme and actuates the BOM switch 78. Hence, the P-channel cue signal P=0 at time t7 is generated. However, since the difference between the time code signals t6 and t7 is less than two seconds, the previous P-channel cue signal of P=1 at time t6 is erased from the RAM 28 and is now replaced by P=1 at time t7-2. In addition, the actuation of the BOM switch 78 at time t7 results in the generation of the Q-channel cue signal X=01 at time t7.

At time t8 the operator detects the fade-out of the third audio programme and the concurrent fade-in of the fourth audio programme. At this time he actuates the BOM switch 78 once again. Accordingly, the microcomputer of the cue editor 7 generates the following P-channel and Q-channel cue signals P=0, MNR=04 and X=01. Also, the time code corresponding to time t8 is stored in the RAM 28. Further, the microcomputer senses at time t8 the immediately preceding P-channel cue signal stored in the RAM 28 also had been P=0. Hence, the microcomputer additionally writes into the RAM 28 the further P-channel cue signal of P=1 at time t8-2.

Finally, upon detecting the end of the fourth audio programme, the operator actuates the EOM switch 77, and upon detection of the lead-out portion of the tape 1, the microcomputer generates the following P-channel and Q-channel signals: P=2 at time t9, and MNR=AA (hexidecimal) at this same time. This represents the lead-out portion of the tape 1.

After the RAM 28 stores the TOC data generated in the above-described manner, the STORE cue editing switch 74 is actuated. This drives the VTR to rewind the tape 1 to the beginning, or initial point, and then the tape 1 advances and the TOC data stored in the RAM 28 is read out and recorded in the track 3b. During this recording mode, the TOC data is disposed in the format illustrated in Figure 8.

When the keyboard 8 of Figure 11 is operated in accordance with technique (2), whereby the TOC data is generated merely by the actuation of the respective switches, a suitable one of the TOC data generator switches 77 to 79 is actuated and also the numeral switches of the key pad 80 are actuated, the latter serving to generate time code data. This mode may be selected by operating the EDIT switch of the edit mode switches 82.

When technique (3) is selected, as when the cue editor is operated in conjunction with a PCM editor, the EDITOR INPUT switch 82 is operated. Cut-in and cut-out edit points function as BOM and EOM points, resulting in an updating of the audio programme number (MNR) and also resulting in the generation of the index number X=00. These Q-channel cue signals are stored in the RAM 28 together with the time codes corresponding to these points, as read from the recording tape. Alternatively, once the cut-in and cut-out points have been selected, the audio programme defined by these points may be transferred from the playback tape to the recording tape, and the operator may operate the BOM switch 78 and the EOM switch 77 at the beginning and end of this edit operation. This is similar to the first-mentioned technique (1) wherein the cue data is generated in real time.

The foregoing has described the manner in which the Q-channel cue signals are produced by the operator in response to the manual operation of the function control switches 81 and the numerical key pad 80.

Various changes and modifications are of course possible. For example, instead of recording TOC data in the format shown in Figure 8, the track 3b may have recorded therein the cue signals shown in Figures 2A to 2C, as well as the P-channel cue signal shown in Figure 3B. Also, suitable electronic sensors may be provided to detect pauses, beginning and end portions of audio programmes, and other predetermined characteristics in the recorded information. Such automatic detection may be used in place of an operator, and such detection may result in the automatic generation of suitable P-channel and Q-channel cue signals. Such signals will be analogous to those which are generated in response to the actuation of the TOC data generator switches 77 to 79 of Figure 11. Still further, the RAM 28 may be formed as a nonvolatile memory, such as a bubble memory, to prevent the loss of cue data therein in the event of a power failure or other loss-of-memory event.

## Claims

1. Apparatus for converting first cue data recorded on a first recording medium (1) and representing predetermined characteristics of information also recorded on said first recording medium (1) into second cue data to be recorded on a second recording medium, said apparatus comprising:
reproduced signal input circuit means (16, 17; 9) for receiving played back first cue data and information from said first recording medium (1);
code signal generating means (5, 21) for generating code signals having a predetermined relationship with said played back information and representing relative locations on said first recording medium (1) at which said information is recorded;
memory means (18) for temporarily storing said played back first cue data; and
signal output means (20) for deriving said second cue data and information to be recorded on said second recording medium;
characterized in that:
said first cue data recorded on said first recording medium (1) includes a first portion containing data representing the predetermined characteristics of the recorded information and an associated second portion containing data representing the relative locations on said first recording medium (1) at which said predetermined characteristics occur;
and by:
converting means (15) for converting said first cue data into said second cue data having a different form from said first cue data; and
format means (20) for combining said first cue data from said converting means (15) and the played back information and for encoding them into a combined signal having said second cue data portion and an information portion to be recorded on said second recording medium.

2. Apparatus according to claim 1 wherein said first cue data is recorded on said first recording medium (1) in a track (3a, 3b) which differs from the track or tracks (2) in which said information is recorded.

3. Apparatus according to claim 2 wherein said first recording medium (1) has recorded further thereon code signals representing relative locations on said first recording medium (1); and wherein said format means (20) is operative in response to the played back code signals from said code signal generating means (5, 21) to combine said second cue data stored in said memory means (18) with the played back information.

4. Apparatus according to claim 1, claim 2 or claim 3 wherein said second recording medium is a disc.

## Patentansprüche

1. Gerät zum Konvertieren von ersten Markierungsinformationen, die auf einem ersten Aufzeichnungsmedium (1) aufgezeichnet sind und vorbestimmte Informationscharakteristiken darstellen, die auch auf dem genannten ersten Aufzeichnungsmedium (1) aufgezeichnet sind, in zweite Markierungsinformationen, die auf einem zweiten Aufzeichnungsmedium aufzuzeichnen sind, wobei das Gerät umfaßt:
Schaltungsmittel (16, 17, 9) für das reproduzierte Eingangssignal, zum Empfang wiedergegebener erster Markierungsinformationen und Informationen des genannten ersten Aufzeichnungsmediums (1);
Codesignale erzeugende Mittel (5, 21) zur Erzeugung von Codesignalen, die eine vorbestimmte Beziehung zur genannten Wiedergabeinformation haben und die relativen Lagen auf dem genannten ersten Aufzeichnungsmedium (1) darstellen, auf welchem die genannte Information aufgezeichnet ist;
Speichermittel (18) zum vorübergehenden Speichern der wiedergegebenen ersten Markierungsinformationen; und
Signalausgangsmittel (20) zur Ableitung der genannten zweiten Markierungsinformationen und der Information, die auf dem genannten zweiten Aufzeichnungsmedium aufgezeichnet werden soll;
dadurch gekennzeichnet ,
daß erstgenannte Markierungsinformationen, die auf dem genannten ersten Aufzeichnungsmedium (1) aufgezeichnet sind, eine erste Menge umfassen, die Daten enthält, die die vorbestimmten Charakteristiken der aufgezeichneten Information darstellen und eine assoziierte zweite Menge, die Daten enthält, die die relativen Lagen auf dem genannten ersten Aufzeichnungsmedium (1) darstellen, bei dem die genannten vorbestimmten Charakteristiken vorliegen; und durch Mittel (15) zum Konvertieren der genannten ersten Markierungsinformationen in die genannten zweiten Markierungsinformationen, die eine von den genannten ersten Markierungsinformationen verschiedene Form haben; und Formierungs-Mittel zum Verknüpfen der genannten ersten Markierungsinformationen aus den genannten Mitteln (15) zum Verknüpfen mit der Wiedergabeinformation und zum Verschlüsseln dieser in ein verknüpftes Signal, das die genannten zweiten Markierungsinformationsmenge und eine erste Informationsbereich hat, die auf dem genannten zweiten Aufzeichnungsmedium aufzuzeichnen sind.

2. Gerät nach Anspruch 1, wobei die ersten Markierungsinformationen auf dem ersten Aufzeichnungsmedium (1) in einer Spur (3a, 3b) aufgezeichnet sind, welche sich unterscheidet von der Spur oder den Spuren (2), in welche die genannte Information aufgezeichnet ist.

3. Gerät nach Anspruch 2, wobei das genannte erste Aufzeichnungsmedium (1) weiter Codesignale aufgezeichnet hat, die die relativen Lagen auf dem genannten ersten Aufzeichnungsmedium (1) darstellen; und worin das genannte Formierungs-Mittel in Hinblick auf die Wiedergabe-Code-Signale der genannten Mittel (5, 21) zur Erzeugung des Codesignals wirksam ist, um die genannten zweiten Markierungsdaten, die in den genannten Speichermitteln (18) gespeichert sind, mit der Wiedergabeinformation zu verknüpfen.

4. Gerät nach Anspruch 1, 2 oder 3, wobei das genannte zweite Aufzeichnungsmedium eine Platte ist.

## Revendications

1. Appareil de conversion de premières données de repérage, enregistrées sur un premier support d'enregistrement (1) et représentant des caractéristiques prédéterminées de l'information qui est aussi enregistrée sur le premier support d'enregistrement (1), en secondes données de repérage destinées à être enregistrées sur le second support d'enregistrement, l'appareil comprenant :

un circuit d'entrée de signaux lus (16, 17 ; 9) destiné à recevoir des premières données de repérage et l'information lues sur le premier support d'enregistrement (1), un dispositif générateur de signaux de codes (5, 21) destiné à créer des signaux de codes ayant une relation prédéterminée par rapport à l'information lue et représentant, sur le premier support d'enregistrement (1), des emplacements relatifs auxquels l'information est lue, une mémoire (18) destinée à conserver temporairement les premières données lues de repérage, et un dispositif (20) de sortie de données destiné à dériver des secondes données de repérage et l'information qui doivent être enregistrées sur le second support d'enregistrement, caractérisé en ce que les premières données de repérage enregistrées sur le premier support d'enregistrement (1) comprennent une première partie contenant des données représentant des caractéristiques prédéterminées de l'information enregistrée et une seconde partie associée contenant des données représentant les emplacements relatifs, sur le premier support d'enregistrement (1), auxquels apparaissent les caractéristiques prédéterminées, et par un dispositif de conversion (15) destiné à convertir les premières données de repérage en secondes données de repérage ayant une forme différente des premières données de repérage, et un dispositif (20) de formattage destiné à combiner les premières données de repérage provenant du dispositif de conversion (15) et l'information lue et à les coder en un signal combiné ayant la partie des secondes données de repérage et une partie d'information à enregistrer sur le second support d'enregistrement.

2. Appareil selon la revendication 1, dans lequel les premières données de repérage sont enregistrées sur le premier support d'enregistrement (1) dans une piste (3a, 3b) qui est différente de la piste ou des pistes (2) dans lesquelles l'information est enregistrée.

3. Appareil selon la revendication 2, dans lequel le premier support d'enregistrement (1) porte l'enregistrement de signaux de codes représentant des emplacements relatifs sur le premier support d'enregistrement (1), et dans lequel le dispositif de formattage (20) est commandé par les signaux de codes lus provenant du dispositif (5, 21) générateur de signaux de codes pour la combinaison des secondes données de repérage conservées dans la mémoire (18) à l'information lue.

4. Appareil selon la revendication 1, 2 ou 3, dans lequel le second support d'enregistrement est un disque.

| SYNC | C1 ~ C14 | D A T A |
|------|----------|---------|

|← ──────────── 1 frame ──────────── →|

## Fig. 1A

## Fig. 1B

## Fig. 2A

## Fig.2B

## Fig.2C

**Fig.3A**

inner-side

information area

program area

lead-in | music 1 | >2 sec | music 2 | <2 sec | music 3 | music 4 | lead-out

outer-side

**Fig.3B**

P

2 sec    2 sec

1
0

**Fig.3C**

MNR

00 | 01 | 01 | 02 | 02 | 03 | 03 | 04 | AA

2

Q    X

≠00 | 00 | ≠00 (e.g. 01) | 00 | ≠00 | 00 | ≠00 | ≠00 | ≠00

time    0

**Fig. 4**

**Fig. 5**

**Fig. 6**

Fig. 7

# Fig.8A

| PRE-AMBLE | 1st SECTOR | | Nth SECTOR | MID-AMBLE | (N+1)th SECTOR | | POST-AMBLE |
|---|---|---|---|---|---|---|---|

# Fig.8C

| SYNC | IM2 | GAP4 |
|---|---|---|

# Fig.8D

| SYNC | IM3 | GAP5 |
|---|---|---|

# Fig.8B

| GAP-0 | SYNC | IM-1 | GAP-1 | SYNC | AM-1 | SEC-TOR NO | TAPE NO | CRC | GAP-2 | SYNC | AM-2 | DIM | LEM-GTH | DATA | CRC | GAP-3 |
|---|---|---|---|---|---|---|---|---|---|---|---|---|---|---|---|---|

ID FIELD          DATA FIELD

# Fig.8E

| SUB CODE | DIM |
|---|---|
| P | 10 |
| Q (MODE-1) | 20 |
| Q (MODE-2) | 21 |

EP 0 316 304 B1

Fig. 9

<u>7</u>

INPUT TC

36 — 37 — TC READER 38 — LATCH/BUFFER 39 — 32

34

35

INTERRUPT GEN. 40

TOC DATA

44 — 43 — FM MODULATOR 42 — LATCH 41

45 — 46 — FM DE-MODULATOR 47 — LATCH/BUFFER 48

INTERRUPT GEN. 49

PCM EDITOR 10

50 — RECEIVER 51

53 — DRIVER 52

EDITOR CONTRO-LLER 54

CONTROL GEN. 56

LATCH/BUFFER 55

Fig. 10A

Fig.10B

KEYBOARD 8

TC
TAPE TIME
| 0 | 1 | 4 | 5 | 3 | 8 | 1 | 1 | —72
BF
HOURS  MIN  SEC  FRAM

PREROLL TIME
| 2 | 0 | —73

CHANNELS
2   4

NO EMP.
PREEMPHASIS
EMP.

LOC.POS
EVENT DISPLAY          89
P
| 0 | 3 |  | 0 | 1 |  | 0 | 1 | 3 | 0 | 1 | 5 | 2 | 7 |
Q { 1
    2
MNR    INX   HOURS   MIN  SEC  FRAM

ENTRY OR COMMENT DISPLAY  90
| D | E | L |  | O | K | ? |  | ( | Y | / | N | ) |

PRINT OUT
TAPE VERIFY
AUDIO TRACK
1   2
STORE
—74
MEMORY CLEAR    LOAD

84
INDICATER AT REVIEW
Q      Q      Q      Q
PAUSE  BOM   INX   EOM

KEY PUSH OFFSET
TIME DISPLAY
85~ | 1 | 0 | 0 |
MILLISEC

REVIEW

VTR CONTROL
AUTO
PREROLL
FWD
—75
AUTO          SHUTTLE   STOP
LOCATE

83

INPUT SELECT
EDIT
(P,Q)
EVENT      82
SLC.       EDITOR
           INP.
INX
79      REAL TIME
        INP.

PREROLL   KEY PUSH   EMP   BUZZER
TIME      OFFSET
91
CH

REV    PAUSE    FWD
X⅛            X⅛
XI              XI
              —76
X2              X2

REW            FF
SHUTTLE DIAL

EOM    BOM
77     78
TOC  DATA
GENERATOR

| 7 | 8 | 9 |
| 4 | 5 | 6 | —80
| 1 | 2 | 3 |
| — | 0 | + |

| YES | NO | DEL |
| ← | → | ↑ | —81
| RECALL | ↓ |
| ENTER |

Fig. 11

EP 0 316 304 B1

Fig.12A

Fig.12B

Fig.12C

Fig.12D

Fig.12E

EP 0 316 304 B1